# EUROPEAN PATENT APPLICATION

(11) **EP 4 712 388 A1**
(43) Date of publication of application: **18.03.2026**
(21) Application number: 23936049.8
(22) Date of filing: 09.05.2023
(51) Int. Cl.: H04L 5/00, H04W 24/02

(54) **METHODS FOR DETERMINING RESOURCE STATE, APPARATUSES AND STORAGE MEDIUM**

(71) Applicant: Beijing Xiaomi Mobile Software Co., Ltd., Beijing 100085 (CN)
(72) Inventor: GUO, Shengxiang, Beijing 100085 (CN)
(74) Representative: Stöckeler, Ferdinand
(86) International application number: PCT/CN2023/093109
(87) International publication number: WO 2024/229722

(57) **Abstract**

The present disclosure relates to methods for determining a resource state, apparatuses, and a storage medium. A method comprises: a terminal device sending indication information to a network device, wherein the indication information can be used for indicating the resource use state of N CG resources, and N can be a natural number determined according to the number of bits of the indication information and/or configuration information received from the network device. In this way, the number of the CG resources indicated by the indication information can be accurately determined, thereby improving the flexibility and accuracy of state indication.

## Description

### TECHNICAL FIELD

The disclosure relates to the communication field, in particular to a method for determining a resource state, an apparatus and a storage medium.

### BACKGROUND

In wireless communication systems, to reduce uplink service latency, the 3rd generation partnership project (3GPP) has introduced a configured grant (CG) transmission mode-also referred to as an uplink grant-free transmission mode. With this CG transmission mode, a network device may pre-configure one or more sets of CG configurations for a terminal. The terminal may then independently use the wireless resources corresponding to the CG configuration for uplink transmission, without requiring scheduling from the network device. This not only saves scheduling resources but also reduces uplink service latency.

### SUMMARY

Embodiments of the disclosure provide a method for determining a resource state, an apparatus and a storage medium.

According to a first aspect of the embodiments of the disclosure, a method for determining a resource state is provided. The method is performed by a terminal, and includes:
sending indication information to a network device, in which the indication information indicates resource usage states of N configured grant (CG) resources, where N is a natural number determined based on a number of bits of the indication information and/or based on configuration information received from the network device.

According to a second aspect of the embodiments of the disclosure, a method for determining a resource state is provided. The method is performed by a network device and includes:
receiving indication information sent by a terminal, in which the indication information indicates resource usage states of N CG resources, where N is a natural number determined based on a number of bits of the indication information and/or based on configuration information received from the network device.

According to a third aspect of the embodiments of the disclosure, a terminal is provided, which includes:
a first transceiver module configured to send indication information to a network device, in which the indication information indicates resource usage states of N CG resources, where N is a natural number determined based on a number of bits of the indication information and/or based on configuration information of the network device.

According to a fourth aspect of the embodiments of the disclosure, a network device is provided, which includes:
a second transceiver module configured to receive indication information sent by a terminal, the indication information indicates resource usage states of N CG resources, where N is a natural number determined based on a number of bits of the indication information and/or based on configuration information of the network device.

According to a fifth aspect of the embodiments of the disclosure, a communication apparatus is provided, which includes:
a processor; and
a memory for storing instructions executable by the processor;
in which the processor is configured to execute the method for determining a resource state according to the first aspect of the disclosure.

According to a sixth aspect of the embodiments of the disclosure, a communication apparatus is provided, which includes:
a processor; and
a memory for storing instructions executable by the processor;
in which the processor is configured to execute the method for determining a resource state according to the second aspect of the disclosure.

According to a seventh aspect of the embodiments of the disclosure, a computer-readable storage medium is provided. The computer-readable storage medium stores computer program instructions which, when executed by a processor, casus the processor to implement the method for determining a resource state provided in the first aspect of the disclosure.

According to an eighth aspect of the embodiments of the disclosure, a computer-readable storage medium is provided. The computer-readable storage medium stores computer program instructions which, when executed by a processor, casus the processor to implement the method for determining a resource state provided in the second aspect of the disclosure.

According to a ninth aspect of the embodiments of the disclosure, a communication system is provided, which includes:
a terminal, configured to execute the method for determining a resource state provided in the first aspect of the disclosure; and
a network device, configured to execute the method for determining a resource state provided in the second aspect of the disclosure

The technical solutions provided in the embodiments of the disclosure may include the following beneficial effects. The terminal sends the indication information to the network device, in which the indication information indicates resource usage states of N CG resources, where N is a natural number determined based on a number of bits of the indication information and/or based on configuration information received from the network device. In this way, a number of CG resources indicated by the indication information may be accurately determined, and a flexibility and accuracy of state indication are improved.

It is understandable that the above general description and the following detailed descriptions are illustrative and explanatory only and do not limit the disclosure.

### BRIEF DESCRIPTION OF THE DRAWINGS

The drawings herein are incorporated into and constitute a part of the specification, illustrate embodiments consistent with the disclosure and, together with the specification, serve to explain the principles of the disclosure.
FIG. 1 is a schematic diagram of a communication system according to an embodiment.
FIG. 2 is a flowchart of a method for determining a resource state according to an embodiment.
FIG. 3 is a schematic diagram of a configured grant (CG) resource according to an embodiment.
FIG. 4 is a schematic diagram of a CG resource according to an embodiment.
FIG. 5 is a flowchart of a method for determining a resource state according to an embodiment.
FIG. 6 is a schematic diagram of a CG resource according to an embodiment.
FIG. 7 is a schematic diagram of a CG resource according to an embodiment.
FIG. 8 is a schematic diagram of a CG resource according to an embodiment.
FIG. 9 is a schematic diagram of a CG resource according to an embodiment.
FIG. 10 is a flowchart of a method for determining a resource state according to an embodiment.
FIG. 11 is a flowchart of a method for determining a resource state according to an embodiment.
FIG. 12 is a flowchart of a method for determining a resource state according to an embodiment.
FIG. 13 is a flowchart of a method for determining a resource state according to an embodiment.
FIG. 14 is a flowchart of a method for determining a resource state according to an embodiment.
FIG. 15 is a block diagram of a terminal according to an embodiment.
FIG. 16 is a block diagram of a network device according to an embodiment.
FIG. 17 is block diagram of a communication apparatus according to an embodiment.

### DETAILED DESCRIPTION

Detailed descriptions are be given herein of example embodiments, examples of which are illustrated in the accompanying drawings. When the following description refers to the accompanying drawings, the same numerals in different drawings denote the same or similar elements unless indicated otherwise. The implementations described in the following example embodiments do not represent all implementations consistent with the disclosure. Instead, they are merely examples of apparatuses and methods consistent with some aspects of the disclosure as detailed in the appended claims.

**In** the description of the embodiments of the disclosure, terms such as "first" and "second" are used to distinguish similar objects, and are not necessarily to be construed as indicating a specific order or sequence. In addition, unless stated to the contrary, in the description with reference to the accompanying drawings, the same reference numerals in different drawings denote the same elements.

In the description of the embodiments of the disclosure, unless otherwise specified, "plurality" means two or more, and other quantifiers follow a similar rule. Expressions "at least one", "one or more" or similar expressions refer to any combination of these items, including any combination of a single item or multiple items. For example, "at least one" may represent any number; as another example, one or more of a, b, and c may represent: a, b, c, a-b, a-c, b-c, or a-b-c, where a, b, and c may be single or multiple. Expression "and/or" describes an associative relationship between associated objects, indicating that there may be three relationships. For example, A and/or B may mean: A exists alone, A and B exist simultaneously, or B exists alone, where A and B may be singular or plural. The character "/" indicates that the associated objects before and after it have an "or" relationship. The singular forms "a", "an", "one", "the", "said" , "the above" and "the foregoing" are also intended to include the plural forms unless the context clearly indicates otherwise.

In the description of the embodiments of the disclosure, descriptive expressions such as "in one case A, in another case B" and "in response to one case A, in response to another case B" may include the following technical solutions depending on the situation: executing A independently of B, that is, A in some embodiments; executing B independently of A, that is, B in some embodiments; executing A and B selectively, that is, selecting to execute either A or B in some embodiments; executing both A and B, that is, A and B in some embodiments. The same applies when there are more branches such as A, B, and C.

In the description of the embodiments of the disclosure, expressions such as "including A", "comprising A", "indicating A", and "carrying A" may be interpreted as directly carrying A, or as indirectly indicating A.

In the description of the embodiments of the disclosure, terms such as "in response to...", "in response to determining...", "in the case of...", "when...", "at the time of...", "if...", and "in an event that..." may be replaced with each other.

In some embodiments, terms such as "greater than", "greater than or equal to", "above", "higher than", and "not less than" may be replaced with each other; terms such as "less than", "less than or equal to", "below", "lower than", and "not greater than" may be replaced with each other.

In some embodiments, terms such as "network element", "node", "function", "apparatus", "device", "system", "chip", and "chip system" may be replaced with each other.

**In** addition, each element, each row, or each column in tables of the embodiments of the disclosure may be implemented as an independent embodiment, and any combination of any element, any row, or any column may also be implemented as an independent embodiment.

Although operations or steps are described in a specific order in the embodiments of the disclosure or the accompanying drawings, this should not be construed as requiring these operations or steps to be performed in the specific order shown or in a serial order, nor as requiring all the shown operations or steps to be performed to achieve a desired result. In the embodiments of the disclosure, these operations or steps may be performed in any order without contradiction; these operations or steps may also be performed in parallel; a part of these operations or steps may also be performed; and the operations or steps in multiple embodiments or accompanying drawings may be combined arbitrarily. The embodiments of the disclosure do not limit this.

It should be noted that the embodiments of the disclosure are not exhaustive, and are only illustrative of some embodiments, and do not serve as specific limitations on the protection scope of the disclosure. Without contradiction, each step in a certain embodiment may be implemented as an independent embodiment, and the steps may be combined arbitrarily. For example, a solution obtained by removing some steps from a certain embodiment may also be implemented as an independent embodiment, and the order of steps in a certain embodiment may be exchanged arbitrarily. In addition, optional implementations in a certain embodiment may be combined arbitrarily; further, various embodiments may be combined arbitrarily. For example, some or all steps of different embodiments may be combined arbitrarily, and a certain embodiment may be combined arbitrarily with optional implementations of other embodiments.

Implementation environment of the embodiments of the disclosure is introduced below.

The technical solutions of the embodiments of the disclosure may be applied to various communication systems. The communication system may include one or more of the 4th generation (4G) communication system, the 5th generation (5G) communication system, and other future wireless communication systems (such as 6G). The communication system may also include one or more of a public land mobile network (PLMN) network, a device-to-device (D2D) communication system, a machine-to-machine (M2M) communication system, an internet of things (IoT) communication system, a vehicle-to-everything (V2X) communication system, or other communication systems.

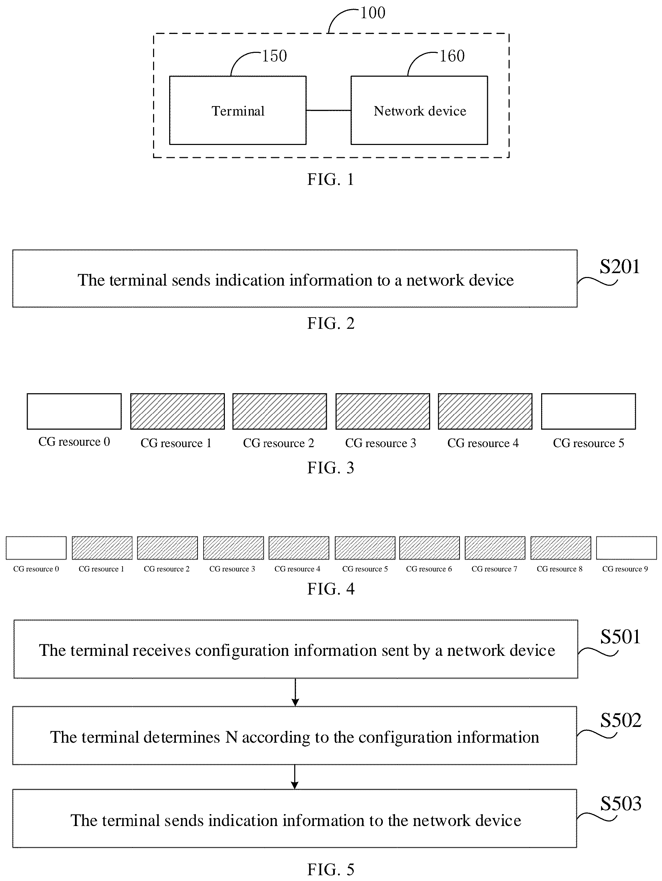

FIG. 1 is a schematic diagram of a communication system 100 according to an embodiment. As shown in FIG. 1, the communication system 100 may include a terminal 150 and a network device 160. The communication system may be configured to support 4G network access technologies, such as long term evolution (LTE) access technology, or 5G network access technologies, such as new radio access technology (New RAT), or other future wireless communication technologies. It should be noted that in this communication system, the number of network devices and terminals may be one or more. The number of network devices and terminals in the communication system shown in FIG. 1 is only an adaptive example, and the disclosure does not limit this.

The network device in FIG. 1 may be configured to provide wireless communication functions for the terminal. For example, the network device may include an evolved Node B (eNB or eNodeB) in the LTE; the network device may also include a next generation Node B (gNB or gNodeB) in the 5G network; the network device may also include a next generation radio access network (NG-RAN) device in the 5G network; the network device may also include at least one of a base station in a future-evolved PLMN, a broadband network gateway (BNG), an aggregation switch, or a non-3GPP access device. In some embodiments, the network device in the embodiments of the disclosure may include at least one of the following various forms of base stations, such as: a macro base station, a micro base station (also called a small station), a relay station, an access point, a 5G base station or a future base station, a satellite, a transmitting and receiving point (TRP), a transmitting point (TP), a mobile switching center, and devices such as D2D, M2M, IoT, V2X, or other devices that assume base station functions in the communication system. The embodiments of the disclosure do not specifically limit this. For convenience of description, in the embodiments of the disclosure, all devices that provide wireless communication functions for the terminal may be referred to as a network device.

In some embodiments, the above network device may include a core network device and an access network device. The access network device may also be referred as a base station. The terminal may communicate with the core network device via the access network device.

The terminal in FIG. 1 may be an electronic device that provides voice or data connectivity. For example, the terminal may also be called a user equipment (UE), a subscriber unit, a mobile station, a station, a terminal, etc. By way of example, the terminal may include a smartphone, a smart wearable device, a smart speaker, a smart tablet, a wireless modem, a wireless local loop (WLL) station, a personal digital assistant (PDA), a customer premise equipment (CPE), and the like. With the development of wireless communication technology, devices that may access the communication system, communicate with the network device of the communication system, communicate with other objects via the communication system, or enable direct communication between two or more devices may all be the terminal in the embodiments of the disclosure. For instance, the terminal may be a terminal and a vehicle in intelligent transportation, a household device in smart home, an electricity meter, a voltage monitoring instrument, an environmental monitoring instrument in smart grid, and a video monitoring instrument in intelligent security network, a cash register, and the like. In the embodiments of the disclosure, the terminal may communicate with the network device. A plurality of terminals may also communicate with each other. The terminal may be statically fixed or mobile, and the embodiments of the disclosure do not limit this.

In some embodiments of the disclosure, both the aforementioned terminal and network device may support the CG transmission mode, which may also be referred to as the uplink grant-free transmission mode.

For example, the network device may configure one or more sets of CG configurations for the terminal based on the CG transmission mode. Each set of CG configurations may include one or more CG resources. The terminal may independently use the CG resource(s) for uplink transmission based on the CG transmission mode, without requiring scheduling from the network device. This not only saves scheduling resources but also reduces uplink service latency. In an implementation, the CG resource may also be referred to as physical uplink shared channel (PUSCH) transmission resource (TR) for CG (i.e., CG PUSCH TR), or as PUSCH transmission occasion (TO) for CG (i.e., CG PUSCH TO), which may be simply called CG PUSCH occasion, CG TO, or TO for short. In another implementation, the CG resource may be CG TO group, where one CG TO group may include one or more CG TOs.

In some embodiments, each set of CG configurations may correspond to one CG period, and the CG configurations may take effect within the CG period. A number of symbols corresponding to one CG period may be a value specified in a protocol. Alternatively, the number of symbols corresponding to one CG period may be determined by the network device and sent to the terminal-for example, the network device may send the number of symbols to the terminal via a higher-layer signaling. In an implementation, one CG period may correspond to a maximum of 14*40960 symbols. The higher-layer signaling may be radio resource control (RRC) signaling or other control signaling.

In some embodiments, the network device may allocate a plurality of sets of CG configurations to the terminal, for example, allocating 16 sets of CG configurations. Different CG configurations may have the same or different frequency-domain positions. Similarly, different CG configurations may have the same or different time-domain positions. For instance, different CG configurations may share the same frequency-domain position but have different time-domain positions; different CG configurations may have different frequency-domain positions but share the same time-domain position; or different CG configurations may have both different frequency-domain positions and different time-domain positions.

In the embodiments of the disclosure, the network device may allocate the CG configuration(s) to the terminal based on the CG transmission mode in multiple ways. Examples are as follows.

In an implementation, the network device may send all information of the CG configuration(s) to the terminal via a first configuration message. After receiving the first configuration message sent by the network device, the terminal independently uses the CG resource(s) in the CG configuration(s) for uplink transmission. Here, the first configuration message may be an RRC message or another type of message.

In another implementation, the network device may first send all information of the CG configuration(s) to the terminal via a first configuration message, then activate the CG configuration(s) via a second configuration message. After receiving both the first configuration message and the second configuration message, the terminal may independently use the CG resource(s) in the CG configuration(s) for uplink transmission. Here, the first configuration message may be an RRC message or another type of message, and the second configuration message may be downlink control information (DCI), a medium access control control element (MAC CE), or another type of message.

In a further implementation, the network device may send part of information of the CG configuration(s) to the terminal via a first configuration message, and send the remaining information of the CG configuration(s) to the terminal via a second configuration message while activating the CG configuration(s). Thus all information of the CG configuration(s) is complete. The terminal may independently use the CG resource(s) in the CG configuration(s) for uplink transmission after receiving both the first configuration message and the second configuration message.

In related arts, management of the CG resource is relatively simplistic and cannot meet requirements of new services. For example, the aforementioned communication system may also support an XR service, which may include augmented reality (AR) and/or virtual reality (VR). Unlike three existing typical services-ultra-reliable low-latency communications (URLLC), enhanced mobile broadband (eMBB), and enhanced machine-type communication (eMTC)-the XR service is characterized by periodicity, high throughput requirements, and short latency requirements, thus demanding more flexible management of the CG resource.

FIG. 2 is a flowchart of a method for determining a resource state according to an embodiment. The method may be executed by the terminal in the aforementioned communication system. As shown in FIG. 2, the method may include the following step.

At S201, the terminal sends indication information to a network device.

The indication information indicates resource usage states of N CG resources, where N may be any natural number. For example, N may be a natural number determined based on a number of bits of the indication information and/or based on configuration information received from the network device.

A CG resource among the N CG resources may be a resource allocated by the network device to the terminal based on the CG transmission mode. For example, the network device may allocate one or more CG periods to the terminal (a set of CG periods may also be referred to as a set of CG configurations), and each CG period may include one or more CG resources.

In some embodiments, the CG resource may be a CG PUSCH TR, a CG PUSCH TO, a CG PUSCH occasion, a CG TO, or a TO.

In other embodiments, the CG resource may also be a CG TO group (TO group), where one CG TO group may include one or more CG TOs.

A resource usage state of the CG resource may be a used state or an unused state. The unused state may also be called an idle state, and the used state may also be called a non-idle state.

In some embodiments, the terminal does not use the CG resource in the unused state. In other embodiments, the terminal does not use the CG resource in the unoccupied state until the indication information is updated.

The aforementioned indication information may also be referred to as dynamic indication information or uplink dynamic indication information.

The indication information may be carried by uplink control information (UCI). For example, the indication information may be included in the UCI. The indication information may occupy an independent UCI, or may be multiplexed with other control information sent by the terminal in the same UCI. The UCI may be new UCI or CG-UC. The UCI may be carried by a CG PUSCH and sent via any one or more CG resources.

**In** some embodiments, the indication information may be multiplexed on a PUSCH, and the PUSCH carrying the indication information may be any CG resource (CG TO) within a CG period.

**In** some embodiments, the indication information may be a bitmap. The bitmap may include one or more information bits, and one information bit may correspond to one or more CG resources (i.e., one information bit may indicate the resource usage state of one or more CG resources).

In some embodiments, the terminal may send the aforementioned indication information to the network device in a case where the terminal is configured with the CG resource(s).

In other embodiments, the terminal may send the indication information according to a configuration of the network device. For example, the terminal may determine whether to send the indication information according to a first message received from the network device. Similarly, the network device may configure the indication information for the terminal. For instance, the network device may send the first message to the terminal, and the first message may be used by the terminal to determine whether to send the indication information.

In some embodiments, the terminal may send the indication information in every CG resource. In some other embodiments, the terminal may send the indication information only in the CG resource where an uplink service or a signaling need to be transmitted. In some other embodiments, the terminal may send the indication information in the first K CG resources of each CG period, where K may be any natural number, such as 1 or 2.

With the above method, the terminal sends the indication information to the network device. The indication information may indicate the resource usage states of the N CG resources, where N is a natural number determined based on the number of bits of the indication information and/or the configuration information received from the network device. In this way, a number of CG resources indicated by the indication information may be accurately determined, and a flexibility and accuracy of state indication are improved.

In some embodiments of the disclosure, the aforementioned N may be a natural number determined based on the number of bits of the indication information.

N may be an integer multiple of the number of bits. For example, N may be equal to the number of bits, or N may be an integer multiple of the number of bits (e.g., twice or three times). It should be noted that the "number of bits" refers to a count of bits included in the indication information.

For example, the indication information may include n information bits, and one information bit may correspond to m CG resources (e.g., TOs or TO groups). In other words, one information bit may indicate the resource usage state of m CG resources. Both n and m are natural numbers. In this case, the number of CG resources (N) indicated by the indication information may be n*m. For instance, the indication information may indicate n*m CG resources after a first time-domain position. The first time-domain position may be a time-domain position of a channel carrying the indication information. For example, when the indication information is carried by a CG resource, the first time-domain position may be the time-domain position of the CG resource that carries the indication information.

In some embodiments, the aforementioned N CG resources may be CG resources after the CG resource where the channel carrying the indication information is located.

FIG. 3 is a schematic diagram of a CG resource according to an embodiment. As shown in FIG. 3, a number of bits of the indication information is 4 (i.e., the indication information includes 4 information bits), and one information bit corresponds to one CG resource. The CG resource carrying the indication information is CG resource 0, and the indication information may sequentially indicate the resource usage states of CG resource 1, CG resource 2, CG resource 3, and CG resource 4. Each information bit corresponds one-to-one with each CG resource in a predefined order.

FIG. 4 is a schematic diagram of a CG resource according to an embodiment. As shown in FIG. 4, the number of bits of the indication information is 4 (i.e., the indication information includes 4 information bits), and one information bit corresponds to two CG resource. The CG resource carrying the indication information is CG resource 0, and the indication information may sequentially indicate the resource usage states of a total of 8 CG resources from CG resource 1 to CG resource 8. For example, a first information bit indicates the resource usage state of CG resources 1 and 2, a second information bit indicates the resource usage state of CG resources 3 and 4, a third information bit indicates the resource usage state of CG resources 5 and 6, and a fourth information bit indicates the resource usage state of CG resources 7 and 8.

It should be noted that the number of bits of the aforementioned indication information may be a value predefined by the protocol, a value determined by the network device and sent to the terminal, or a value determined by the terminal and sent to the network device.

In an implementation, the network device may send the number of bits to the terminal during a process of allocating CG configuration(s) to the terminal based on the CG transmission mode. For example, the network device may carry the number of bits of the indication information via the aforementioned first configuration message or second configuration message. The terminal may also receive the number of bits of the indication information via the first configuration message or the second configuration message.

In another implementation, the network device may also send the number of bits to the terminal via other messages. For example, the network device may send the number of bits to the terminal via any one of an RRC message, a MAC CE, DCI, or other messages sent by the network device to the terminal.

In this way, the terminal may determine the number N of CG resources whose resource usage states needs to be reported according to the number of bits of the indication information, and may report the resource usage states of the N CG resources to the network device via the indication information.

In other embodiments of the disclosure, N may be a natural number determined according to the configuration information received from the network device.

FIG. 5 is a flowchart of a method for determining a resource state according to an embodiment. The method may be executed by the terminal in the aforementioned communication system. As shown in FIG. 5, the method may include the following steps.

At S501, the terminal receives configuration information sent by a network device.

For example, the terminal may receive the configuration information via any one of an RRC message, a MAC CE, DCI, or other messages sent by the network device to the terminal.

At S502, the terminal determines N according to the configuration information.

At S503, the terminal sends indication information to the network device.

The indication information may indicate resource usage states of N CG resources.

In this way, the terminal may determine the number N of CG resources whose resource usage states needs to be reported according to the configuration information received from the network device, and may report the resource usage states of the N CG resources to the network device via the indication information.

In some embodiments, the configuration information may include a first number, which may be a number of CG resources within a first time range. The aforementioned N CG resources may be a subset or an entire set of the CG resources within the first time range. The first number may be any natural number. The terminal may determine N according to the first number, and similarly, the network device may also determine N according to the first number.

It should be noted that the first time range may be a continuous or non-continuous time period. The first time range may also be referred to as a first duration. For example, the first time range may include one or more CG periods; or the first time range may include at least one CG resource (e.g., TO), where the at least one CG resource may be all or part of CG resources in one CG period, or all or part of the CG resources in a plurality of CG periods; or the first time range may include at least one symbol; or the first time range may include at least one slot; or the first time range may include at least one sub-frame; or the first time range may include at least one radio frame; or the first time range may include an absolute time range.

A time-domain position of a channel carrying the indication information may be any time.

In an implementation, the time-domain position of the channel carrying the indication information may be within the first time range. That is, the indication information may be transmitted at any time within the first time range. For instance, the indication information may be transmitted via any one or more CG resources within the first time range.

In another implementation, the time-domain position of the channel carrying the indication information may be earlier than the first time range. That is, the indication information may be transmitted at any time earlier than the first time range. For example, the indication information may be transmitted via any one or more CG resources before the first time range.

In an implementation, the aforementioned N CG resources may include the CG resource carrying the indication information.

In another implementation, the aforementioned N CG resources may not include the CG resource carrying the indication information. In this way, the number of bits of the indication information may be reduced, and a resource overhead caused by reporting the indication information may be decreased.

In this embodiment, there may be multiple ways to determine N based on the first number.

In an implementation, the first number may be taken as N.

For example, the first number in the configuration information is n, that is, there are n CG resources within the first time range. Then, N=n, that is, the indication information may indicate the resource usage states of n CG resources.

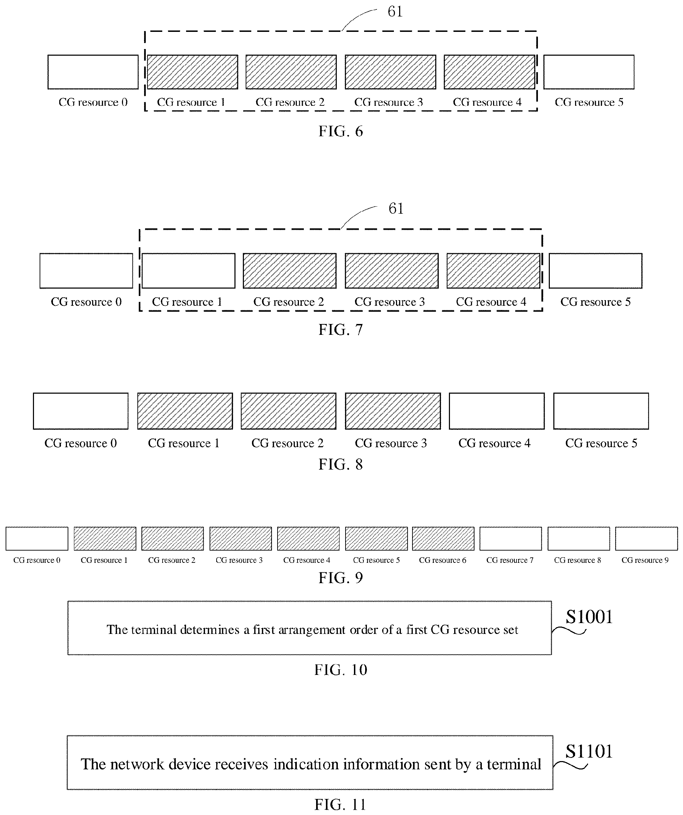

FIG. 6 is a schematic diagram of a CG resource according to an embodiment. As shown in FIG. 6, the first number in the configuration information is 4, that is, there are 4 CG resources within a first time range 61. Then the indication information may indicate the resource usage states of all 4 CG resources (e.g., CG resources 1 to 4 in FIG. 6) within the first time range.

In another implementation, a difference between the first number and a second number may be taken as N.

The second number is any natural number smaller than the first number. The second number may be obtained in multiple ways, as exemplified below.

The second number may be predefined by a protocol. For example, both the terminal and the network device agree via the protocol that the second number is 1 or 2.

The second number may be configured by the network device. For example, the network device may configure the second number and send the second number to the terminal, and the terminal may receive the second number sent by the network device.

The second number may be configured by the terminal. For example, the terminal may configure the value of the second number and send the second number to the network device, and the network device may receive the second number sent by the terminal.

The second number may be determined based on an index of a CG resource where the channel carrying the indication information is located.

The second number may be equal to the index; or the second number may be obtained by adding 1 to a difference between the index and a minimum index. Each CG resource within the first time range may correspond to one index, and the index may increase incrementally starting from the minimum index (the minimum index may be 0, 1, or another value, with an increment step of 1). For example, the first time range includes 4 CG resources, whose indices are 1, 2, 3, and 4 in sequence. If the index of the CG resource where the channel carrying the indication information is 2, the second number may be 2. In this case, N=4-2=2, and the indication information may indicate the resource usage states of 2 CG resources (i.e., CG resource 3 and CG resource 4).

FIG. 7 is a schematic diagram of a CG resource according to an embodiment. As shown in FIG. 7, the first number in the configuration information is 4, that is there are 4 CG resources within the first time range 61, and the second number is 1. Thus, N=4-1=3 may be calculated, and the indication information may indicate the resource usage states of 3 CG resources (e.g., CG resources 2 to 4 in FIG. 7) within the first time range.

In other embodiments, the configuration information may include a third number, which may be used to determine a number of CG resources that the indication information is capable of indicating. The third number may be any natural number. The terminal may determine N based on the third number, and similarly, the network device may also determine N based on the third number.

There are multiple ways to determine N based on the third number, as exemplified below.

In an implementation, the third number may be directly taken as N.

For example, the third number in the configuration information is n, so N=n. That is, the indication information may indicate the resource usage states of n CG resources. The n CG resources may be within the same CG period or across different CG periods.

In some embodiments, the N CG resources may be the third number of CG resources after the CG resource where the channel carrying the indication information is located.

FIG. 8 is a schematic diagram of a CG resource according to an embodiment. As shown in FIG. 8, the third number in the configuration information is 3, then N=3. If the CG resource where the channel carrying the indication information is located is CG resource 1, the indication information indicates the resource usage states of CG resources 1 to 3.

In another implementation, N may be a product of the third number and a fourth number.

The fourth number may be any natural number, and may be obtained in multiple ways. For example, the fourth number may be predefined by a protocol, or may be configured by the network device, or may be configured by the terminal.

FIG. 9 is a schematic diagram of a CG resource according to an embodiment. As shown in FIG. 9, the third number is 3 and the fourth number is 2. That is, one information bit of the indication information may correspond to two CG resources, so N=3×2=6. If the CG resource carrying the indication information is CG resource 0, the indication information may sequentially indicate the resource usage states of 6 CG resources (i.e., CG resources 1 to 6). For example, a first information bit indicates the resource usage state of CG resources 1 and 2, a second information bit indicates the resource usage state of CG resources 3 and 4, and a third information bit indicates the resource usage state of CG resources 5 and 6.

In further embodiments, the configuration information may include the first number and the third number. The third number may be used to determine the number of CG resources that the indication information is capable of indicating, and the first number may be the number of CG resources within the first time range. The N CG resources may be a subset or the entire set of the CG resources within the first time range. Both the first number and the third number may be any natural number.

The terminal may determine N based on the first number and the third number, and similarly, the network device may also determine N based on the first number and the third number.

It should be noted that the network device may send the first number and the third number simultaneously via one message, or send the first number and the third number separately via two messages, which is not limited in the disclosure. For the specific definitions of the first number and the third number, reference may be made to the descriptions in the foregoing embodiments of the disclosure, which are not be repeated here.

In this embodiment, there are multiple ways to determine N based on the first number and the third number. Examples are as follows.

In an implementation, a minimum value between the first number and the third number may be taken as N.

In another implementation, a fifth number may be determined first based on the first number, then N is determined based on the third number and the fifth number.

For example, a minimum value between the third number and the fifth number may be taken as N. That is, when the third number is greater than or equal to the fifth number, the third number is taken as N; and when the third number is smaller than the fifth number, the fifth number is taken as N.

The fifth number may be determined based on the first number in multiple ways. For example, the first number may be taken as the fifth number, or a difference between the first number and a second number may be taken as the fifth number.

The second number may be ant natural number smaller than the first number. For example, the second number is predefined by the protocol, or configured by the network device, or configured by the terminal, or determined based on the index of the CG resource where the channel carrying the indication information is located.

For methods for obtaining the second number, reference may also be made to the descriptions in the foregoing embodiments of the disclosure, which are not be repeated here.

**In** this way, the terminal may determine, based on the configuration information received from the network device, the number N of CG resources whose resource usage states needs to be reported, and may report the resource usage states of the N CG resources to the network device via the indication information.

**In** further embodiments of the disclosure, N may be a natural number determined based on the number of bits of the indication information and the configuration information received from the network device.

For example, a first candidate number may be determined based on the number of bits of the indication information; a second candidate number may be determined based on the configuration information received from the network device; and a minimum value between the first candidate number and the second candidate number may be taken as N.

**It** should be noted that, where there is no contradiction, this embodiment may be combined with the foregoing embodiments, implementations, and their various optional solutions of the disclosure. For instance, specific methods of determining the first candidate number based on the number of bits of the indication information in this embodiment may refer to the methods of determining the natural number N based on the number of bits of the indication information in the foregoing embodiments of the disclosure. Similarly, specific methods of determining the second candidate number based on the configuration information received from the network device in this embodiment may refer to the methods of determining the natural number N based on the configuration information in the foregoing embodiments of the disclosure. Details are not repeated herein.

In this way, the terminal may determine, based on the configuration information received from the network device, the number N of CG resources whose resource usage states needs to be reported, and may report the resource usage states of the N CG resources to the network device via the indication information.

In some embodiments, the first time range may include one or more first-type time ranges, and all CG resources within a single first-type time range may correspond to one piece of the aforementioned indication information. Different first-type time ranges may not overlap or may overlap in terms of time-domain positions.

In an implementation, the network device may configure one or more first-type time range for the terminal during the process of allocating CG configuration(s) to the terminal based on the CG transmission mode. For example, the network device may carry information about the one or more first-type time range via a third configuration message, and the terminal may receive the information about the one or more first-type time range via the third configuration message.

In another implementation, the network device may also send the information about the one or more first-type time range to the terminal via other messages. For example, the network device may send the information about the one or more first-type time range to the terminal via any one of the following: an RRC message, a MAC CE, DCI, or other messages sent by the network device to the terminal.

In a further implementation, the network device and/or the terminal may also determine the one or more first-type time range based on a predefined rule. For example, the network device and/or the terminal may determine the one or more first-type time range based on the first time range and an index of the CG resource where dynamic indication information is located.

In other embodiments, the number of CG resources included in the first time range may be greater than the number of information bits included in the indication information; or the number of CG resources included in the first time range may be greater than (the number of information bits included in the indication information plus 1; or the number of CG resources included in the first time range minus 1 may be greater than the number of information bits included in the indication information.

FIG. 10 is a flowchart of a method for determining a resource state according to an embodiment. The method may be executed by the terminal in the aforementioned communication system. As shown in FIG. 10, the method may include the following step.

At S1001, the terminal determines a first arrangement order of a first CG resource set.

The first CG resource set may include CG resources of M CG periods, where M is a natural number. For example, the first CG resource set may include all or part of CG resources in one CG period, or may include all or part of CG resources in a plurality of CG periods.

In some embodiments, the first arrangement order of the first set of CG resources may be determined based on a first sorting parameter of the CG resources in the first CG resource set.

The first sorting parameter includes at least one of:
time-domain position information of the CG resource, which may include a first symbol or a last symbol occupied by the CG resource (e.g., CG TO), or a first slot or a last slot occupied by the CG resource;
frequency-domain position information of the CG resource, which may include a start frequency-domain unit, an end frequency-domain unit, or a central frequency-domain unit occupied by the CG resource, where the frequency-domain unit may be a resource element (RE), a resource element group (REG), a resource block (RB), a resource block group (RBG), a bandwidth part (BWP), or a band; or
index information of the CG resource, which may include a first index and a second index. The first index may be an index of the CG period where the CG resource is located, and the second index may be an index of the CG resource within the CG period. The first index may be configured by the network device for each CG period, or may be determined based on a configuration order of the CG period. Similarly, the second index may be configured by the network device for each CG resource, or may be determined based on a time-domain position order of the CG resource.

It should be noted that the CG resources may be sorted in ascending or descending order based on the first sorting parameter.

In some embodiments, the CG resources may be sorted in ascending or descending order using any one of the time-domain position information, the frequency-domain position information, or the index information to obtain the first arrangement order.

In other embodiments, the CG resources may be sorted based on both the time-domain position information and the frequency-domain position information. For example, the CG resources may be sorted first based on the time-domain position information, then the CG resources with the same time-domain position information may be sorted based on the frequency-domain position information. For another example, the CG resources may be sorted based on the frequency-domain position information, then the CG resources with the same frequency-domain position information may be sorted based on the time-domain position information.

Similarly, the CG resources may also be sorted based on any two or all three of the time-domain position information, the frequency-domain position information, and the index information.

In this way, the CG resources in the first set of CG resources may be sorted based on the first sorting parameter.

In other embodiments, a second arrangement order of the M CG periods may be determined first, then the first arrangement order may be determined based on the second arrangement order and the first sorting parameter of CG resources in each CG period.

In an implementation, the second arrangement order of the M CG periods may be determined based on a second sorting parameter of the M CG periods.

The second sorting parameter may include at least one of:
time-domain position information of the CG period, which may include a first symbol or a last symbol occupied by the CG period, or including a first slot or a last slot occupied by the CG period;
frequency-domain position information of the CG period, which may include a start frequency-domain unit, an end frequency-domain unit, or a central frequency-domain unit occupied by the CG period, where the frequency-domain unit may be an RE, an REG, an RB, an RBG, an BWP, or band; or
index information of the CG period, which may also be referred to as a first index. The first index may be configured by the network device for each CG period, or the index information may be determined based on an order in which the M CG periods are configured.

In this way, the M CG periods may be sorted according to the first sorting parameter.

In an implementation, the method of determining the first arrangement order based on the second arrangement order may include: determining a sorting of the M CG periods based on the second arrangement order, where CG resources in the same CG period are adjacent in sequence and sorted according to the first sorting parameter.

In some embodiments, the aforementioned first arrangement order may be determined according to the second arrangement order and the first sorting parameter of CG resources in each CG period.

For example, the M CG periods in the first CG resource set may be sorted to determine the second arrangement order; then, after the sorting of the M CG periods is determined, the CG resources in each CG period are sorted according to the first sorting parameter, and finally the first arrangement order is obtained. In this way, CG resources in the same CG period are adjacent in sequence, which may avoid interleaving of CG resources from different CG periods after sorting.

As an example, in a case where the first CG resource set includes three CG periods, namely CG period 0, CG period 1, and CG period 2 (i.e., M = 3), each CG period includes four CG resources. Specifically, CG period 0 includes CG resource 0, CG resource 1, CG resource 2, and CG resource 3; CG period 1 includes CG resource 4, CG resource 5, CG resource 6, and CG resource 7; CG period 2 includes CG resource 8, CG resource 9, CG resource 10, and CG resource 11.

The second arrangement order of the M CG periods may be determined according to the second sorting parameter of the CG periods (e.g., time-domain position information and/or frequency-domain position information). For example, the second arrangement order in a forward order may be CG period 2, CG period 0, and CG period 1. For the CG resources in each CG period, a third arrangement order of the CG resources in each CG period may be obtained by sorting according to the first sorting parameter of the CG resources (e.g., time-domain position information and/or frequency-domain position information). For example, the third arrangement order of CG period 0 is CG resource 0, CG resource 1, CG resource 2, and CG resource 3; the third arrangement order of CG period 1 is CG resource 4, CG resource 5, CG resource 6, and CG resource 7; the third arrangement order of CG period 2 is CG resource 8, CG resource 9, CG resource 10, and CG resource 11. Finally, the first arrangement order of CGs in the first CG resource set is obtained, and the first arrangement order in the forward order may be: CG resource 8, CG resource 9, CG resource 10, CG resource 11, CG resource 0, CG resource 1, CG resource 2, CG resource 3, CG resource 4, CG resource 5, CG resource 6, and CG resource 7.

In other embodiments, the second arrangement order of the M CG periods may be determined; the third arrangement order of CG resources in each CG period may be determined; and the aforementioned first arrangement order may be determined according to the second arrangement order and the third arrangement order.

For example, the second arrangement order of the M CG periods may be determined according to the second sorting parameter of the CG periods. For the CG resources in each CG period, the third arrangement order of the CG resources within the CG period may be determined according to the first sorting parameter. The first arrangement order may be determined according to the second arrangement order and the third arrangement order. For example, it may first be ensured that the M CG periods are sorted according to the second arrangement order, and then that the CG resources in each CG period are sorted according to the third arrangement order.

In this way, the CG resources in one or more CG periods may be sorted according to the first sorting parameter and/or the second sorting parameter.

Similarly, the network device may also sort the CG resources in one or more CG periods in the same manner as the terminal. This may improve an accuracy of indicating the resource usage states of the N CG resources via the indication information.

In some embodiments of the disclosure, the terminal may further determine the N CG resources within the first CG resource set according to the first arrangement order, and send the indication information to the network device. The indication information may indicate the resource usage states of the N CG resources. The N CG resources may be a subset or an entire set of the first CG resource set.

In an implementation, the terminal may determine, according to the first arrangement order, the N CG resources within the first CG resource set in a forward order or in a backward order.

In another implementation, the terminal may take CG resources, after a first time-domain position, in the first CG resource set as a second CG resource set, and determine, based on the first arrangement order, the N CG resources within the second CG resource set either in a forward order or in a backward order. The first time-domain position is a time-domain position of the channel carrying the indication information.

In some embodiments of the disclosure, the indication information may include at least one information bit, and the terminal may further determine, based on the first arrangement order, corresponding relationship between the N CG resources and the at least one information bit.

In an implementation, the terminal may determine, based on the first arrangement order, the N CG resources within the first CG resource set either in the forward order or in the backward order.

The terminal may further determine, based on the first arrangement order, the corresponding relationship between the N CG resources and the at least one information bit.

For example, the indication information is a bitmap, an indication range of the indication information may be the first CG resource set, which may include one or more CG periods. A first information bit in the bitmap of the indication information may correspond to a first CG resource of the first CG resource set, a second information bit may correspond to a second CG resource of the first CG resource set, and so on in the forward order, so as to obtain the corresponding relationship between the N CG resources and the information bits.

For another example, the indication information is the bitmap, the indication range of the indication information may be the first CG resource set, which may include one or more CG periods. The first information bit in the bitmap of the indication information may correspond to a last CG resource of the first CG resource set, the second information bit may correspond to a second-to-last CG resource of the first CG resource set, and so on in the backward order, so as to obtain the corresponding relationship between the N CG resources and the information bits.

In another implementation, the terminal may take CG resources, after a first time-domain position, in the first CG resource set as a second CG resource set, and determine, based on the first arrangement order, the N CG resources within the second CG resource set either in a forward order or in a backward order. The first time-domain position is a time-domain position of the channel carrying the indication information.

The terminal may further determine, based on the first arrangement order, the corresponding relationship between the N CG resources and the at least one information bit either in the forward order or in the backward order.

For example, the indication information is the bitmap, a maximum indication range of the indication information is the first CG resource set, which may include one or more CG periods. The time-domain position of the channel carrying the indication information is the first time-domain position (the first time-domain position may be a first CG resource), the first information bit in the bitmap of the indication information may correspond to a first CG resource in the first CG resource set that is after the first time-domain position, the second information bit may correspond to a second CG resource in the first CG resource set that is after the first time-domain position, and so on in the forward order, so as to obtain the corresponding relationship between the N CG resources and the information bits.

For another example, the indication information is the bitmap, a maximum indication range of the indication information is the first CG resource set, which may include one or more CG periods. The time-domain position of the channel carrying the indication information is the first time-domain position (the first time-domain position may be a first CG resource), the first information bit in the bitmap of the indication information may correspond to a last CG resource in the first CG resource set that is after the first time-domain position, the second information bit may correspond to a second-to-last CG resource in the first CG resource set that is after the first time-domain position, and so on in the backward order, so as to obtain the corresponding relationship between the N CG resources and the information bits.

It should be noted that the aforementioned CG resource may be a CG TO or a CG TO group, and one CG TO group may include one or more CG TOs.

In some embodiments, the terminal may further send the indication information to the network device. The indication information may be used to indicate the resource usage states of the N CG resources. The N CG resources may be the subset or the entire set of the first CG resource set.

FIG. 11 is a flowchart of a method for determining a resource state according to an embodiment. The method may be executed by the network device in the aforementioned communication system. As shown in FIG. 11, the method may include the following step.

At S1101, the network device receives indication information sent by a terminal.

The indication information indicates resource usage states of N CG resources, where N may be any natural number. For example, N may be a natural number determined based on a number of bits of the indication information and/or based on configuration information received from the network device.

**In** some embodiments, the network device may determine the resource usage states of the N CG resources according to the indication information.

It should be noted that, for specific implementations of the indication information and the CG resources, reference may be made to the specific descriptions in the foregoing embodiments of the disclosure, and details are not repeated herein.

With the above method, the network device receives the indication information sent by the terminal. The indication information may indicate the resource usage states of the N CG resources, where N is a natural number determined based on the number of bits of the indication information and/or the configuration information received from the network device. In this way, the number of CG resources indicated by the indication information may be accurately determined, and the flexibility and accuracy of state indication are improved.

**In** some embodiments, the terminal may send the aforementioned indication information to the network device in a case where the terminal is configured with the CG resource(s).

**In** other embodiments, the network device may configure the terminal with the indication information. For example, the terminal may send a first message to the terminal, and the first message is used for the terminal to determine whether to send the indication information. Similarly, the terminal may send the indication information according to a configuration of the network device. For instance, the terminal may determine whether to send the indication information according to the first message received from the network device.

**In** some embodiments, the network device may receive the indication information in every CG resource. In some other embodiments, the network device may receive the indication information only in the CG resource where an uplink service or a signaling need to be transmitted. In some other embodiments, the network device may receive the indication information in the first K CG resources of each CG period, where K may be any natural number, such as 1 or 2.

**In** some embodiments of the disclosure, the aforementioned N may be a natural number determined based on the number of bits of the indication information.

N may be an integer multiple of the number of bits. For example, N may be equal to the number of bits, or N may be an integer multiple of the number of bits (e.g., twice or three times). It should be noted that the "number of bits" refers to a count of bits included in the indication information.

In some embodiments, the aforementioned N CG resources may be CG resources after the CG resource where the channel carrying the indication information is located.

It should be noted that the number of bits of the aforementioned indication information may be a value predefined by the protocol, a value determined by the network device and sent to the terminal, or a value determined by the terminal and sent to the network device.

In an implementation, the network device may send the number of bits to the terminal during a process of allocating CG configuration(s) to the terminal based on the CG transmission mode. For example, the network device may carry the number of bits of the indication information via the aforementioned first configuration message or second configuration message. The terminal may also receive the number of bits of the indication information via the first configuration message or the second configuration message.

In another implementation, the network device may also send the number of bits to the terminal via other messages. For example, the network device may send the number of bits to the terminal via any one of an RRC message, a MAC CE, DCI, or other messages sent by the network device to the terminal.

In this way, the network device may determine the number N of CG resources whose resource usage states needs to be reported according to the number of bits of the indication information, and may obtain the resource usage states of the N CG resources via the indication information.

In other embodiments of the disclosure, N may be a natural number determined according to the configuration information of the network device.

In some embodiments, the configuration information may include a first number, which may be a number of CG resources within a first time range. The aforementioned N CG resources may be a subset or an entire set of the CG resources within the first time range. The first number may be any natural number. The terminal may determine N according to the first number, and similarly, the network device may also determine N according to the first number.

It should be noted that the first time range may be a continuous or non-continuous time period. For specific descriptions of the first time range, reference may also be made to the detailed descriptions in the foregoing embodiments of the disclosure, and details are not repeated herein.

A time-domain position of a channel carrying the indication information may be any time.

**In** an implementation, the time-domain position of the channel carrying the indication information may be within the first time range. That is, the indication information may be transmitted at any time within the first time range. For instance, the indication information may be transmitted via any one or more CG resources within the first time range.

**In** another implementation, the time-domain position of the channel carrying the indication information may be earlier than the first time range. That is, the indication information may be transmitted at any time earlier than the first time range. For example, the indication information may be transmitted via any one or more CG resources before the first time range.

**In** an implementation, the aforementioned N CG resources may include the CG resource carrying the indication information.

**In** another implementation, the aforementioned N CG resources may not include the CG resource carrying the indication information. In this way, the number of bits of the indication information may be reduced, and a resource overhead caused by reporting the indication information may be decreased.

**In** this embodiment, there may be multiple ways to determine N based on the first number.

**In** an implementation, the first number may be taken as N.

**In** another implementation, a difference between the first number and a second number may be taken as N.

The second number is any natural number smaller than the first number. The second number may be obtained in multiple ways, as exemplified below.

The second number may be predefined by a protocol. For example, both the terminal and the network device agree via the protocol that the second number is 1 or 2.

The second number may be configured by the network device. For example, the network device may configure the second number and send the second number to the terminal, and the terminal may receive the second number sent by the network device.

The second number may be configured by the terminal. For example, the terminal may configure the value of the second number and send the second number to the network device, and the network device may receive the second number sent by the terminal.

The second number may be determined based on an index of a CG resource where the channel carrying the indication information is located.

**In** other embodiments, the configuration information may include a third number, which may be used to determine a number of CG resources that the indication information is capable of indicating. The third number may be any natural number. The terminal may determine N based on the third number, and similarly, the network device may also determine N based on the third number.

There are multiple ways to determine N based on the third number, as exemplified below.

In an implementation, the third number may be directly taken as N.

In another implementation, N may be a product of the third number and a fourth number.

The fourth number may be any natural number, and may be obtained in multiple ways. For example, the fourth number may be predefined by a protocol, or may be configured by the network device, or may be configured by the terminal.

In further embodiments, the configuration information may include the first number and the third number. The third number may be used to determine the number of CG resources that the indication information is capable of indicating, and the first number may be the number of CG resources within the first time range. The N CG resources may be a subset or the entire set of the CG resources within the first time range. Both the first number and the third number may be any natural number.

The terminal may determine N based on the first number and the third number, and similarly, the network device may also determine N based on the first number and the third number.

**In** an implementation, a minimum value between the first number and the third number may be taken as N.

In another implementation, a fifth number may be determined first based on the first number, then N is determined based on the third number and the fifth number.

For example, a minimum value between the third number and the fifth number may be taken as N. That is, when the third number is greater than or equal to the fifth number, the third number is taken as N; and when the third number is smaller than the fifth number, the fifth number is taken as N.

The fifth number may be determined based on the first number in multiple ways. For example, the first number may be taken as the fifth number, or a difference between the first number and a second number may be taken as the fifth number.

The second number may be ant natural number smaller than the first number. For example, the second number is predefined by the protocol, or configured by the network device, or configured by the terminal, or determined based on the index of the CG resource where the channel carrying the indication information is located.

For methods for obtaining the second number, reference may also be made to the descriptions in the foregoing embodiments of the disclosure, which are not be repeated here.

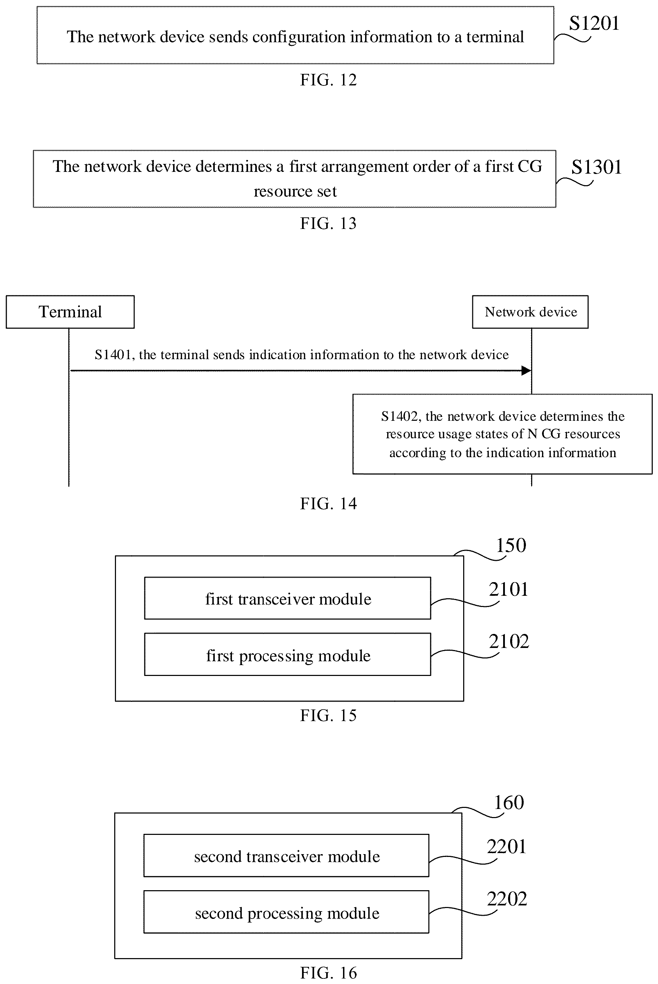

FIG. 12 is a flowchart of a method for determining a resource state according to an embodiment. The method may be executed by the network device in the aforementioned communication system. As shown in FIG. 12, the method may include the following step.

At S1201, the network device sends configuration information to a terminal.

The configuration information may be used by the terminal to determine N. For example, the terminal may determine N according to the configuration information; similarly, the network device may also determine N according to the configuration information.

In some embodiments, the configuration information may include a first number and/or a second number.

In this way, the network device may determine, according to the configuration information, the number N of CG resources whose resource usage states needs to be reported, and may receive, via the indication information, the resource usage states of the N CG resources reported by the terminal.

In some embodiments, the first time range may include one or more first-type time ranges, and all CG resources within a single first-type time range may correspond to one piece of the aforementioned indication information. Different first-type time ranges may not overlap or may overlap in terms of time-domain positions.

In an implementation, the network device may configure one or more first-type time range for the terminal during the process of allocating CG configuration(s) to the terminal based on the CG transmission mode. For example, the network device may carry information about the one or more first-type time range via a third configuration message, and the terminal may receive the information about the one or more first-type time range via the third configuration message.

In another implementation, the network device may also send the information about the one or more first-type time range to the terminal via other messages. For example, the network device may send the information about the one or more first-type time range to the terminal via any one of the following: an RRC message, a MAC CE, DCI, or other messages sent by the network device to the terminal.

In a further implementation, the network device and/or the terminal may also determine the one or more first-type time range based on a predefined rule. For example, the network device and/or the terminal may determine the one or more first-type time range based on the first time range and an index of the CG resource where dynamic indication information is located.

In other embodiments, the number of CG resources included in the first time range may be greater than the number of information bits included in the indication information; or the number of CG resources included in the first time range may be greater than (the number of information bits included in the indication information plus 1; or the number of CG resources included in the first time range minus 1 may be greater than the number of information bits included in the indication information.

FIG. 13 is a flowchart of a method for determining a resource state according to an embodiment. The method may be executed by the network device in the aforementioned communication system. As shown in FIG. 13, the method may include the following step.

At S1301, the network device determines a first arrangement order of a first CG resource set.

The first CG resource set may include CG resources of M CG periods, where M is a natural number. For example, the first CG resource set may include all or part of CG resources in one CG period, or may include all or part of CG resources in a plurality of CG periods.

In some embodiments, the first arrangement order of the first set of CG resources may be determined based on a first sorting parameter of the CG resources in the first CG resource set.

The first sorting parameter includes at least one of:
time-domain position information of the CG resource, frequency-domain position information of the CG resource, or index information of the CG resource.

In this way, the CG resources in the first set of CG resources may be sorted based on the first sorting parameter.

In other embodiments, a second arrangement order of the M CG periods may be determined first, then the first arrangement order may be determined based on the second arrangement order and the first sorting parameter of CG resources in each CG period.

In an implementation, the second arrangement order of the M CG periods may be determined based on a second sorting parameter of the M CG periods.

The second sorting parameter may include at least one of:
time-domain position information of the CG period, frequency-domain position information of the CG period, or index information of the CG period.

**In** this way, the M CG periods may be sorted according to the first sorting parameter.

It should be noted that the specific method in which the network device determines the first arrangement order of the first CG resource set may be the same as the method in which the terminal determines the first arrangement order of the first CG resource set in the foregoing embodiments of the disclosure, and details are not repeated herein.

**In** some embodiments of the disclosure, the indication information may include at least one information bit, and the network device may further determine, based on the first arrangement order, corresponding relationship between the N CG resources and the at least one information bit.

In an implementation, the network device may determine, based on the first arrangement order, the N CG resources within the first CG resource set either in the forward order or in the backward order.

The network device may further determine, based on the first arrangement order, the corresponding relationship between the N CG resources and the at least one information bit.

In another implementation, the network device may take CG resources, after a first time-domain position, in the first CG resource set as a second CG resource set, and determine, based on the first arrangement order, the N CG resources within the second CG resource set either in a forward order or in a backward order. The first time-domain position is a time-domain position of the channel carrying the indication information.

The network device may further determine, based on the first arrangement order, the corresponding relationship between the N CG resources and the at least one information bit either in the forward order or in the backward order.

It should be noted that the aforementioned CG resource may be a CG TO or a CG TO group, and one CG TO group may include one or more CG TOs.

It should also be noted that the specific method in which the network device determines the corresponding relationship between the N CG resources and the at least one information bits according to the first arrangement order may be the same as the method in which the terminal determines the corresponding relationship between the N CG resources and the at least one information bits according to the first arrangement order in the foregoing embodiments of the disclosure, and details are not repeated herein.

FIG. 14 is a flowchart of a method for determining a resource state according to an embodiment. As shown in FIG. 14, the method may include the following steps.

At S1401, a terminal sends indication information to a network device.

At S1402, the network device determines the resource usage states of N CG resources according to the indication information.

It should be noted that, in the case of no contradiction, this embodiment may be combined with the foregoing embodiments, implementations, and various optional solutions of the disclosure. For the specific implementation of the above steps in this embodiment, reference may also be made to the descriptions in the foregoing embodiments of the disclosure, and details are not repeated herein.

In this way, both the network device and the terminal may accurately determine the number of CG resources indicated by the indication information, thereby improving the flexibility and accuracy of state indication.

In some embodiments of the disclosure, the network device may send configuration information to the terminal, and the terminal may receive the configuration information and determine N according to the configuration information.

In some embodiments of the disclosure, the network device may determine a first arrangement order of the first CG resource set, and the terminal may also determine the first arrangement order of the first CG resource set.

In an embodiment, the disclosure further provides a communication system, which may include a terminal and a network device. The terminal may execute the method for determining a resource state performed by the terminal in the foregoing embodiments of the disclosure. The network device may execute the method for determining a resource state performed by the network device in the foregoing embodiments of the disclosure.

FIG. 15 is a block diagram of a terminal 150 according to an embodiment. As shown in FIG. 15, the terminal 150 may include:
a first transceiver module 2101, configured to send indication information to a network device, in which the indication information indicates resource usage states of N CG resources, where N is a natural number determined based on a number of bits of the indication information and/or based on configuration information of the network device.

In some embodiments, the first transceiver module 2101 is further configured to receive the configuration information sent by the network device, and the terminal may further include:
a first processing module 2102, configured to determine N based on the configuration information.

In some embodiments, the configuration information includes a first number, the first number is a number of CG resources within a first time range, and the N CG resources are a subset or an entire set of the CG resources within the first time range. The first processing module 2102 is configured to take the first number as N; or take a difference between the first number and a second number as N, the second number is smaller than the first number.

The second number is predefined by a protocol, or configured by the network device, or configured by the terminal, or determined based on an index of a CG resource where a channel carrying the indication information is located.

In some embodiments, a time-domain position of the channel carrying the indication information is within the first time range; or the time-domain position of the channel carrying the indication information is earlier than the first time range.

In some embodiments, the N CG resources do not include a CG resource carrying the indication information.

In some embodiments, the configuration information includes a third number, the third number is used to determine a number of CG resources that the indication information is capable of indicating. The first processing module 2102 is configured to take the third number as N; or take a product of the third number and a fourth number as N.

The fourth number is predefined by a protocol, or configured by the network device, or configured by the terminal.

In some embodiments, the configuration information includes a first number and a third number, the third number is used to determine a number of CG resources that the indication information is capable of indicating, the first number is a number of CG resources within a first time range, and the N CG resources are a subset or an entire set of the CG resources within the first time range. The first processing module 2102 is configured to determine a fifth number based on the first number; and determine N based on the third number and the fifth number.

In some embodiments, the first processing module 2102 is configured to take a minimum value between the third number and the fifth number as N.

In some embodiments, the first processing module 2102 is configured to take the first number as the fifth number; or take a difference between the first number and a second number as the fifth number, the second number is smaller than the first number.

The second number is predefined by a protocol, or configured by the network device, or configured by the terminal, or determined based on an index of a CG resource where a channel carrying the indication information is located.

In some embodiments, N is an integer multiple of the number of bits.

In some embodiments, the N CG resources are a subset or an entire set of a first CG resource set including CG resources of M CG periods, where M is a natural number. The first processing module 2102 is configured to determine a first arrangement order of the first CG resource set.

In some embodiments, the first processing module 2102 is configured to determine the first arrangement order of the first CG resource set based on a first sorting parameter of the CG resources in the first CG resource set, the first sorting parameter includes at least one of:
frequency-domain position information of the CG resource;
time-domain position information of the CG resource; or
index information of the CG resource.

In some embodiments, the first processing module 2102 is configured to determine a second arrangement order of the M CG periods; and determine the first arrangement order based on the second arrangement order.

In some embodiments, the first processing module 2102 is configured to determine the second arrangement order of the M CG periods based on a second sorting parameter of the M CG periods, the second sorting parameter includes at least one of:
frequency-domain position information of the CG period;
time-domain position information of the CG period; or
index information of the CG period.

In some embodiments, the indication information includes at least one information bit. The first processing module 2102 is configured to determine, based on the first arrangement order, corresponding relationship between the N CG resources and the at least one information bit.

In some embodiments, the first processing module 2102 is configured to determine, based on the first arrangement order, the N CG resources within the first CG resource set either in a forward order or in a backward order; and determine, based on the first arrangement order, the corresponding relationship between the N CG resources and the at least one information bit either in the forward order or in the backward order.

In some embodiments, the first processing module 2102 is configured to take CG resources after a first time-domain position in the first CG resource set as a second CG resource set, the first time-domain position is a time-domain position of a channel carrying the indication information; determine, based on the first arrangement order, the N CG resources within the second CG resource set either in a forward order or in a backward order; and determine, based on the first arrangement order, the corresponding relationship between the N CG resources and the at least one information bit either in the forward order or in the backward order.

In some embodiments, a CG resource among the N CG resource is a CG TO or a CG TO group, and the CG TO group includes one or more CG TOs.

FIG. 16 is a block diagram of a network device 160 according to an embodiment. As shown in FIG. 16, the terminal 160 may include:
a second transceiver module 2201, configured to receive indication information sent by a terminal, in which the indication information indicates resource usage states of N CG resources, where N is a natural number determined based on a number of bits of the indication information and/or based on configuration information of the network device.

In some embodiments, the second transceiver module 2201 is further configured to send the configuration information to the terminal. The network device further includes:
a second processing module 2202, configured to determine N based on the configuration information.

In some embodiments, the configuration information includes a first number, the first number is a number of CG resources within a first time range, and the N CG resources are a subset or an entire set of the CG resources within the first time range. The second processing module 2202 is configured to take the first number as N; or take a difference between the first number and a second number as N, the second number is smaller than the first number.

The second number is predefined by a protocol, or configured by the network device, or configured by the terminal, or determined based on an index of a CG resource where a channel carrying the indication information is located.

In some embodiments, a time-domain position of the channel carrying the indication information is within the first time range; or the time-domain position of the channel carrying the indication information is earlier than the first time range.

In some embodiments, the N CG resources do not include a CG resource carrying the indication information.

In some embodiments, the configuration information includes a third number, the third number is used to determine a number of CG resources that the indication information is capable of indicating. The second processing module 2202 is configured to take the third number as N; or take a product of the third number and a fourth number as N.

The fourth number is predefined by a protocol, or configured by the network device, or configured by the terminal.

In some embodiments, the configuration information includes a first number and a third number, the third number is used to determine a number of CG resources that the indication information is capable of indicating, the first number is a number of CG resources within a first time range, and the N CG resources are a subset or an entire set of the CG resources within the first time range. The second processing module 2202 is configured to determine a fifth number based on the first number; and determine N based on the third number and the fifth number.

In some embodiments, the second processing module 2202 is configured to take a minimum value between the third number and the fifth number as N.

In some embodiments, the second processing module 2202 is configured to take the first number as the fifth number; or take a difference between the first number and a second number as the fifth number, the second number is smaller than the first number.

The second number is predefined by a protocol, or configured by the network device, or configured by the terminal, or determined based on an index of a CG resource where a channel carrying the indication information is located.

In some embodiments, N is an integer multiple of the number of bits.

In some embodiments, the N CG resources are a subset or an entire set of a first CG resource set including CG resources of M CG periods, where M is a natural number. The second processing module 2202 is configured to determine a first arrangement order of the first CG resource set.

In some embodiments, the second processing module 2202 is configured to determine the first arrangement order of the first CG resource set based on a first sorting parameter of the CG resources in the first CG resource set, the first sorting parameter includes at least one of:
frequency-domain position information of the CG resource;
time-domain position information of the CG resource; or
index information of the CG resource.

In some embodiments, the second processing module 2202 is configured to determine a second arrangement order of the M CG periods; and
determine the first arrangement order based on the second arrangement order.

In some embodiments, the second processing module 2202 is configured to determine the second arrangement order of the M CG periods based on a second sorting parameter of the M CG periods, the second sorting parameter includes at least one of:
frequency-domain position information of the CG period;
time-domain position information of the CG period; or
index information of the CG period.

In some embodiments, the indication information includes at least one information bit, and the second processing module 2202 is configured to determine, based on the first arrangement order, corresponding relationship between the N CG resources and the at least one information bit.

In some embodiments, the second processing module 2202 is configured to determine, based on the first arrangement order, the N CG resources within the first CG resource set either in a forward order or in a backward order; and determine, based on the first arrangement order, the corresponding relationship between the N CG resources and the at least one information bit either in the forward order or in the backward order.

In some embodiments, the second processing module 2202 is configured to take CG resources after a first time-domain position in the first CG resource set as a second CG resource set, the first time-domain position is a time-domain position of a channel carrying the indication information; determine, based on the first arrangement order, the N CG resources within the second CG resource set in a forward order or a backward order; and determine, based on the first arrangement order, the corresponding relationship between the N CG resources and the at least one information bit either in the forward order or in the backward order.

In some embodiments, a CG resource among the N CG resource is a CG TO or a CG TO group, and the CG TO group includes one or more CG TOs.

Regarding the apparatuses in the above embodiments, the specific methods in which each module performs operations have been described in detail in the embodiments related to the method, and no detailed elaboration is be provided herein.

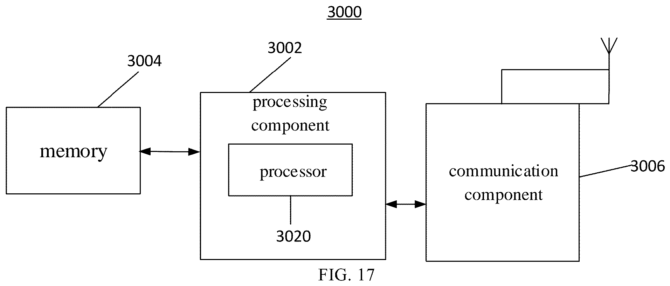

FIG. 17 is a block diagram of a communication apparatus according to an embodiment. The communication apparatus 3000 may be the terminal in the communication system shown in FIG. 1, or the network device in the communication system.

With reference to FIG. 17, the communication apparatus 3000 may include one or more of the following components: a processing component 3002, a memory 3004, and a communication component 3006.

The processing component 3002 may be configured to control the overall operations of the communication apparatus 3000, such as operations associated with display, telephone calls, data communication, camera operations, and recording operations. The processing component 3002 may include one or more processors 3020 to execute instructions, so as to perform all or part of the steps of the aforementioned method for determining a resource state. In addition, the processing component 3002 may include one or more modules to facilitate interaction between the processing component 3002 and other components. For example, the processing component 3002 may include a multimedia module to facilitate interaction between a multimedia component and the processing component 3002.

The memory 3004 is configured to store various types of data to support the operation of the communication apparatus 3000. Examples of such data include instructions for any application program or method operated on the communication apparatus 3000, contact data, phone book data, messages, pictures, videos, and the like. The memory 3004 may be implemented by any type of volatile or non-volatile storage device or a combination thereof, such as static random access memory (SRAM), electrically erasable programmable read-only memory (EEPROM), erasable programmable read-only memory (EPROM), programmable read-only memory (PROM), read-only memory (ROM), magnetic memory, flash memory, magnetic disk, or optical disk.

The communication component 3006 is configured to facilitate wired or wireless communication between the communication apparatus 3000 and other devices. The communication apparatus 3000 may access a wireless network based on a communication standard, such as Wi-Fi, 2G, 3G, 4G, 5G, 6G, NB-IoT, eMTC, or a combination thereof. In an exemplary embodiment, the communication component 3006 receives a broadcast signal or broadcast-related information from an external broadcast management system via a broadcast channel. In an exemplary embodiment, the communication component 3006 further includes a near field communication (NFC) module to facilitate short-range communication. For example, the NFC module may be implemented based on radio frequency identification (RFID) technology, infrared data association (IrDA) technology, ultra-wideband (UWB) technology, Bluetooth (BT) technology, and other technologies.

In an embodiment, the communication apparatus 3000 may be implemented by one or more application-specific integrated circuits (ASICs), digital signal processors (DSPs), digital signal processing devices (DSPDs), programmable logic devices (PLDs), fieldprogrammable gate arrays (FPGAs), controllers, microcontrollers, microprocessors, or other electronic components, so as to execute the aforementioned method for determining a resource state.

The aforementioned communication apparatus 3000 may be an independent electronic device, or a part of an independent electronic device. For example, in an embodiment, the electronic device may be an integrated circuit (IC) or a chip, where the integrated circuit may be a single IC or a collection of multiple ICs; the chip may include, but is not limited to, the following types: graphics processing unit (GPU), central processing unit (CPU), fieldprogrammable gate array (FPGA), digital signal processor (DSP), application-specific integrated circuit (ASIC), system on chip (SoC), and the like. The aforementioned integrated circuit or chip may be used to execute executable instructions (or code) to implement the aforementioned method for determining a resource state. The executable instructions may be stored in the integrated circuit or chip, or obtained from other apparatuses or devices. For example, the integrated circuit or chip includes a processor, a memory, and an interface for communicating with other apparatuses. The executable instructions may be stored in the processor, and when the executable instructions are executed by the processor, the aforementioned method for determining a resource state is implemented. In some embodiments, the integrated circuit or chip may receive executable instructions via the interface and transmit executable instructions to the processor for execution, so as to implement the aforementioned method for determining a resource state.

In an embodiment, the disclosure further provides a computer-readable storage medium having computer program instructions stored thereon, where the program instructions, when executed by a processor, implement the steps of the method for determining a resource state provided by the disclosure. For example, the computer-readable storage medium may be a non-transitory computer-readable storage medium containing instructions, such as the aforementioned memory 3004 containing instructions, and the instructions may be executed by the processor 3020 of the communication apparatus 3000 to complete the aforementioned method for determining a resource state. For example, the non-transitory computer-readable storage medium may be a ROM, a random access memory (RAM), a CD-ROM, a magnetic tape, a floppy disk, an optical data storage device, and the like.

In another embodiment, a computer program product is further provided. The computer program product includes a computer program executable by a programmable apparatus, and the computer program has a code part for executing the aforementioned method for determining a resource state when executed by the programmable apparatus.

After considering the specification and practicing the disclosure, those skilled in the art easily conceive of other implementations of the disclosure. This application is intended to cover any variations, uses, or adaptive changes of the disclosure, which follow the general principles of the disclosure and include common general knowledge or conventional technical means in the technical field not disclosed in the disclosure. The specification and embodiments are only regarded as exemplary, and the true scope and spirit of the disclosure are indicated by the following claims.

It should be understood that the disclosure is not limited to the precise structure that has been described above and shown in the accompanying drawings, and various modifications and changes may be made without departing from its scope. The scope of the disclosure is only limited by the appended claims.

## Claims

1. A method for determining a resource state, performed by a terminal, comprising:
sending indication information to a network device, wherein the indication information indicates resource usage states of N configured grant (CG) resources, where N is a natural number determined based on a number of bits of the indication information and/or based on configuration information received from the network device.

2. The method according to claim 1, further comprising:
receiving the configuration information sent by the network device; and
determining N based on the configuration information.

3. The method according to claim 2, wherein the configuration information comprises a first number, the first number is a number of CG resources within a first time range, and the N CG resources are a subset or an entire set of the CG resources within the first time range; wherein determining N based on the configuration information comprises:
taking the first number as N; or
taking a difference between the first number and a second number as N, wherein the second number is smaller than the first number;
wherein the second number is predefined by a protocol, or configured by the network device, or configured by the terminal, or determined based on an index of a CG resource where a channel carrying the indication information is located.

4. The method according to claim 3, wherein a time-domain position of the channel carrying the indication information is within the first time range; or the time-domain position of the channel carrying the indication information is earlier than the first time range.

5. The method according to claim 3, wherein the N CG resources do not comprise a CG resource carrying the indication information.

6. The method according to claim 2, wherein the configuration information comprises a third number, the third number is used to determine a number of CG resources that the indication information is capable of indicating; wherein determining N based on the configuration information comprises:
taking the third number as N; or
taking a product of the third number and a fourth number as N;
wherein the fourth number is predefined by a protocol, or configured by the network device, or configured by the terminal.

7. The method according to claim 2, wherein the configuration information comprises a first number and a third number, the third number is used to determine a number of CG resources that the indication information is capable of indicating, the first number is a number of CG resources within a first time range, and the N CG resources are a subset or an entire set of the CG resources within the first time range; wherein determining N based on the configuration information comprises:
determining a fifth number based on the first number; and
determining N based on the third number and the fifth number.

8. The method according to claim 7, wherein determining N based on the third number and the fifth number comprises:
taking a minimum value between the third number and the fifth number as N.

9. The method according to claim 7, wherein determining the fifth number based on the first number comprises:
taking the first number as the fifth number; or
taking a difference between the first number and a second number as the fifth number, wherein the second number is smaller than the first number;
wherein the second number is predefined by a protocol, or configured by the network device, or configured by the terminal, or determined based on an index of a CG resource where a channel carrying the indication information is located.

10. The method according to claim 1, wherein N is an integer multiple of the number of bits.

11. The method according to claim 1, wherein the N CG resources are a subset or an entire set of a first CG resource set comprising CG resources of M CG periods, where M is a natural number, and the method further comprises:
determining a first arrangement order of the first CG resource set.

12. The method according to claim 11, wherein determining the first arrangement order of the first CG resource set comprises:
determining the first arrangement order of the first CG resource set based on a first sorting parameter of the CG resources in the first CG resource set, wherein the first sorting parameter comprises at least one of:
frequency-domain position information of the CG resource;
time-domain position information of the CG resource; or
index information of the CG resource.

13. The method according to claim 11, wherein determining the first arrangement order of the first CG resource set comprises:
determining a second arrangement order of the M CG periods;
determining a third arrangement order of CG resources within each CG period; and
determining the first arrangement order based on the second arrangement order and the third arrangement order.

14. The method according to claim 13, wherein determining the second arrangement order of the M CG periods comprises:
determining the second arrangement order of the M CG periods based on a second sorting parameter of the M CG periods, wherein the second sorting parameter comprises at least one of:
frequency-domain position information of the CG period;
time-domain position information of the CG period; or
index information of the CG period.

15. The method according to claim 11, wherein the indication information comprises at least one information bit, and the method further comprises:
determining, based on the first arrangement order, corresponding relationship between the N CG resources and the at least one information bit.

16. The method according to claim 15, wherein determining, based on the first arrangement order, the corresponding relationship between the N CG resources and the at least one information bit comprises:
determining, based on the first arrangement order, the N CG resources within the first CG resource set either in a forward order or in a backward order; and
determining, based on the first arrangement order, the corresponding relationship between the N CG resources and the at least one information bit either in the forward order or in the backward order.

17. The method according to claim 15, wherein determining, based on the first arrangement order, the corresponding relationship between the N CG resources and the at least one information bit comprises:
taking CG resources after a first time-domain position in the first CG resource set as a second CG resource set, wherein the first time-domain position is a time-domain position of a channel carrying the indication information;
determining, based on the first arrangement order, the N CG resources within the second CG resource set either in a forward order or in a backward order; and
determining, based on the first arrangement order, the corresponding relationship between the N CG resources and the at least one information bit either in the forward order or in the backward order.

18. The method according to any one of claims 1 to 17, wherein a CG resource among the N CG resource is a CG transmission occasion (TO) or a CG TO group, and the CG TO group comprises one or more CG TOs.

19. A method for determining a resource state, performed by a network device, comprising:
receiving indication information send by a terminal, wherein the indication information indicates resource usage states of N configured grant (CG) resources, where N is a natural number determined based on a number of bits of the indication information and/or based on configuration information of the network device.

20. The method according to claim 19, further comprising:
sending the configuration information to the terminal; and
determining N based on the configuration information.

21. The method according to claim 20, wherein the configuration information comprises a first number, the first number is a number of CG resources within a first time range, and the N CG resources are a subset or an entire set of the CG resources within the first time range; wherein determining N based on the configuration information comprises:
taking the first number as N; or
taking a difference between the first number and a second number as N, wherein the second number is smaller than the first number;
wherein the second number is predefined by a protocol, or configured by the network device, or configured by the terminal, or determined based on an index of a CG resource where a channel carrying the indication information is located.

22. The method according to claim 21, wherein a time-domain position of the channel carrying the indication information is within the first time range; or the time-domain position of the channel carrying the indication information is earlier than the first time range.

23. The method according to claim 21, wherein the N CG resources do not comprise a CG resource carrying the indication information.

24. The method according to claim 20, wherein the configuration information comprises a third number, the third number is used to determine a number of CG resources that the indication information is capable of indicating; wherein determining N based on the configuration information comprises:
taking the third number as N; or
taking a product of the third number and a fourth number as N;
wherein the fourth number is predefined by a protocol, or configured by the network device, or configured by the terminal.

25. The method according to claim 20, wherein the configuration information comprises a first number and a third number, the third number is used to determine a number of CG resources that the indication information is capable of indicating, the first number is a number of CG resources within a first time range, and the N CG resources are a subset or an entire set of the CG resources within the first time range; wherein determining N based on the configuration information comprises:
determining a fifth number based on the first number; and
determining N based on the third number and the fifth number.

26. The method according to claim 25, wherein determining N based on the third number and the fifth number comprises:
taking a minimum value between the third number and the fifth number as N.

27. The method according to claim 25, wherein determining the fifth number based on the first number comprises:
taking the first number as the fifth number; or
taking a difference between the first number and a second number as the fifth number, wherein the second number is smaller than the first number;
wherein the second number is predefined by a protocol, or configured by the network device, or configured by the terminal, or determined based on an index of a CG resource where a channel carrying the indication information is located.

28. The method according to claim 19, wherein N is an integer multiple of the number of bits.

29. The method according to claim 19, wherein the N CG resources are a subset or an entire set of a first CG resource set comprising CG resources of M CG periods, where M is a natural number, and the method further comprises:
determining a first arrangement order of the first CG resource set.

30. The method according to claim 29, wherein determining the first arrangement order of the first CG resource set comprises:
determining the first arrangement order of the first CG resource set based on a first sorting parameter of the CG resources in the first CG resource set, wherein the first sorting parameter comprises at least one of:
frequency-domain position information of the CG resource;
time-domain position information of the CG resource; or
index information of the CG resource.

31. The method according to claim 29, wherein determining the first arrangement order of the first CG resource set comprises:
determining a second arrangement order of the M CG periods; and
determining the first arrangement order based on the second arrangement order.

32. The method according to claim 31, wherein determining the second arrangement order of the M CG periods comprises:
determining the second arrangement order of the M CG periods based on a second sorting parameter of the M CG periods, wherein the second sorting parameter comprises at least one of:
frequency-domain position information of the CG period;
time-domain position information of the CG period; or
index information of the CG period.

33. The method according to claim 29, wherein the indication information comprises at least one information bit, and the method further comprises:
determining, based on the first arrangement order, corresponding relationship between the N CG resources and the at least one information bit.

34. The method according to claim 33, wherein determining, based on the first arrangement order, the corresponding relationship between the N CG resources and the at least one information bit comprises:
determining, based on the first arrangement order, the N CG resources within the first CG resource set either in a forward order or in a backward order; and
determining, based on the first arrangement order, the corresponding relationship between the N CG resources and the at least one information bit either in the forward order or in the backward order.

35. The method according to claim 33, wherein determining, based on the first arrangement order, the corresponding relationship between the N CG resources and the at least one information bit comprises:
taking CG resources after a first time-domain position in the first CG resource set as a second CG resource set, wherein the first time-domain position is a time-domain position of a channel carrying the indication information;
determining, based on the first arrangement order, the N CG resources within the second CG resource set in a forward order or a backward order; and
determining, based on the first arrangement order, the corresponding relationship between the N CG resources and the at least one information bit either in the forward order or in the backward order.

36. The method according to any one of claims 19 to 35, wherein a CG resource among the N CG resource is a CG transmission occasion (TO) or a CG TO group, and the CG TO group comprises one or more CG TOs.

37. A terminal, comprising:
a first transceiver module configured to send indication information to a network device, wherein the indication information indicates resource usage states of N configured grant (CG) resources, where N is a natural number determined based on a number of bits of the indication information and/or based on configuration information of the network device.

38. A network device, comprising:
a second transceiver module configured to receive indication information sent by a terminal, wherein the indication information indicates resource usage states of N configured grant (CG) resources, where N is a natural number determined based on a number of bits of the indication information and/or based on configuration information of the network device.

39. A communication apparatus, comprising:
a processor; and
a memory for storing instructions executable by the processor;
wherein the processor is configured to execute the method according to any one of claims 1 to 18, or to execute the method according to any one of claims 19 to 36.

40. A computer-readable storage medium having computer program instructions stored thereon, wherein when the computer program instructions are executed by a processor, the method according to any one of claims 1 to 18 is implemented, or the method according to any one of claims 19 to 36 is implemented.

41. A communication system, comprising:
a terminal configured to execute the method according to any one of claims 1 to 18; and
a network device configured to execute the method according to any one of claims 19 to 36.
